Europäisches Patentamt

European Patent Office

Office européen des brevets

(11) Veröffentlichungsnummer: **0 269 873**
**A2**

## (12) EUROPÄISCHE PATENTANMELDUNG

(21) Anmeldenummer: 87115954.7

(22) Anmeldetag: 30.10.87

(51) Int. Cl.4 **C08G 18/42** , C08G 18/46 , C08G 18/22 , C08G 18/24 , C08G 18/14 , C08G 63/34

(30) Priorität: 11.11.86 DE 3638488

(43) Veröffentlichungstag der Anmeldung:
08.06.88 Patentblatt 88/23

(84) Benannte Vertragsstaaten:
AT BE CH DE ES FR GB IT LI NL SE

(71) Anmelder: BASF Aktiengesellschaft
Carl-Bosch-Strasse 38
D-6700 Ludwigshafen(DE)

(72) Erfinder: Streu, Joachim, Dr.
Grellestrasse 24
D-2840 Diepholz(DE)
Erfinder: Straehle, Wolfgang, Dr.
Hampeweg 9
D-6900 Heidelberg(DE)
Erfinder: Ramlow, Gerhard, Dr.
Wintergasse 121
D-6940 Weinheim(DE)

(54) Verfahren zur Herstellung von kompakten oder zelligen Polyurethan-Elastomeren in Gegenwart eines Titan- und/oder Zinnverbindungen enthaltenden Polyester-polyois als Katalysator sowie die Verwendung dieses Katalysators.

(57) Die Erfindung betrifft ein Verfahren zur Herstellung von kompakten oder zelligen Polyurethan-Elastomeren durch Umsetzung von

a) organischen Polyisocyanaten, vorzugsweise in Form von NCO-Gruppen enthaltenden Prepolymeren und/oder modifizierten Urethangruppen enthaltenden organischen Polyisocyanaten mit

b) höhermolekularen Verbindungen mit mindestens 2 reaktiven Wasserstoffatomen, vorzugsweise Polyester-oder Polyether-polyolen und gegebenenfalls

c) Kettenverlängerungs-und/oder Vernetzungsmitteln in Gegenwart von

d) Katalysatoren und gegebenenfalls

e) Treibmitteln,

f) Hilfsmitteln und/oder Zusatzstoffen, wobei als Katalysatoren vorteilhafterweise 0,1 bis 10 Gew.-Teile eines Polyester-polyols, bezogen auf 100 Gew.-Teile der Komponente b) verwendet werden, das hergestellt wird durch Polykondensation von organischen Polycarbonsäuren mit mehrwertigen Alkoholen in Gegenwart von 0,002 bis 5 Gew.% mindestens einer Titan-und/oder Zinnverbindung, bezogen auf das Gewicht des Polykondenastionsgemisches, als Katalysator bei Temperaturen von 150 bis 250°C
sowie die Verwendung dieses Katalysators zur Herstellung von Kunststoffen nach dem Polyisocyanat-Polyadditionsverfahren, vorzugsweise von Polyurethan-Kunststoffen.

EP 0 269 873 A2

## Verfahren zur Herstellung von kompakten oder zelligen Polyurethan-Elastomeren in Gegenwart eines Titan-und/oder Zinnverbindungen enthaltenden Polyester-polyols als Katalysator sowie die Verwendung dieses Katalysators

Die Herstellung von kompakten oder zelligen Polyurethan-Elastomeren durch Umsetzung von organischen Polyisocyanaten mit organischen Polyhydroxylverbindungen in Gegenwart von Katalysatoren und gegebenenfalls Kettenverlängerungs-und/oder Vernetzungsmitteln sowie Treibmitteln, Hilfsmitteln und/oder Zusatzstoffen ist bekannt. Bei geeigneter Wahl der Hydroxylgruppen aufweisenden Polyester, Polyether, Polyesteramide u.a. und organischen Polyisocyanate sowie durch die zusätzliche Mitverwendung von Kettenverlängerungsmitteln, wie z.B. Glykolen, dreiwertigen Alkoholen und/oder Diaminen, können nach dieser Methode sowohl elastische wie starre, gegebenenfalls zellige Polyurethan-Elastomere sowie alle dazwischen liegende Modifikationen hergestellt werden.

Die Herstellung von Polyurethan-Elastomeren, deren mechanische Eigenschaften und Verwendung werden beispielsweise beschrieben in den Monographien High Polymers, Band XVI, "Polyurethanes", Teil I und II von I.H. Saunders und K.C. Frisch (Verlag Interscience Publishers, New York, 1962 bzw. 1964) und Kunststoff-Handbuch, Band VII, Polyurethane, 1966 und 1983 von R. Vieweg und A. Höchtlen bzw. G. Oertel (Carl-Hanser-Verlag, München).

Zur Herstellung der Polyurethan-Elastomeren werden nach der DE-A-831 604 (US-PS 2 778 810) aus den Hydroxylgruppen enthaltenden höhermolekularen Verbindungen und organischen Polyisocyanaten zunächst NCO-gruppenhaltige Prepolymere hergestellt, die dann in einer zweiten Stufe mit dem Kettenverlängerungsmittel, z.B. Diolen oder Diaminen, zum hochmolekularen Elastomeren umgesetzt werden.

Diamine konnten aufgrund ihrer hohen Reaktivität im allgemeinen nicht nach dem one shot-Verfahren verarbeitet werden. Die Entwicklung der Hochdruck-RIM-Technik ermöglichte jedoch die Herstellung von gegebenenfalls zelligen, elastischen Formkörpern mit einer kompakten Oberflächenschicht aus Polyurethan-Polyharnstoff-Elastomeren durch Umsetzung eines one shot-Systems, das im wesentlichen aus organischen Polyisocyanaten, Polyolen, aromatischen Di-bzw. Polyaminen, deren Aminogruppen durch orthoständige Alkylsubstituenten sterisch behindert sind, und einen starken Katalysator für die Reaktion zwischen Hydroxyl-und Isocyanatgruppen bestand, in einem geschlossenen Formwerkzeug. Derartige Verfahren werden beispielsweise in der DE-A-26 22 951 (US-PS 4 218 543) und den EP-A-26 915 und 69 286 beschrieben.

Polyurethan-Elastomersysteme werden jedoch zweckmäßigerweise nach dem one shot-Verfahren mit Hilfe der Niederdruck-oder der Reaktionsspritzguß-Technik (RIM) in offenen oder vorzugsweise geschlossenen Formwerkzeugen verarbeitet. Diese Verfahrenstechniken werden beispielsweise beschrieben in der EP-A-0 017 060, in der Monographie "Integralschaumstoffe" von H. Piechota und H. Röhr (Carl-Hanser Verlag, München, Wien 1975), in Journal of Cellular Plastics, März/April 1975, Seiten 87 bis 98 von D.I. Prepelka und J.L. Wharton und in Journal of Cellular Plastics, März/April 1973 von U. Knipp.

Formkörper aus Polyurethan-Elastomeren können jedoch auch nach dem Gießverfahren hergestellt werden.

Aufgrund der verfeinerten Herstellungstechniken werden auch die Anforderungen an geeignete Polyurethan-Elastomer-Systeme immer weiter erhöht. Zur Erzielung möglichst kurzer Zykluszeiten bei der Herstellung von Formkörpern muß einerseits zur Reduzierung der Formstandzeit die Durchhärtung der Formteile deutlich verbessert werden und andererseits dürfen die Schaumzeiten, d.h. die Start-, Steig-und Abbindezeit, nicht zu kurz sein, um eine gleichmäßige Befüllung des Formwerkzeugs und eine homogene Reaktion zu gewährleisten. Angestrebt werden ferner lange Startzeiten zur Erreichung langer Fließwege.

Die bisher bekannten Katalysatoren und Katalysatorsysteme sind wenig selektiv. Durch eine Erhöhung der Katalyse wird in der Regel die Durchhärtung verbessert, gleichzeitig werden jedoch auch die Start-, Steig-und Abbindezeit verkürzt. Bei der Reaktivitätsabstimmung der Polyurethansysteme wurde daher üblicherweise ein Mittelweg der Katalyse gewählt, so daß bei noch tolerierbaren Schäumzeiten eine ausreichende Durchhärtung erreicht wurde.

Bekannt ist ferner die Herstellung von Polyestern in Gegenwart von Zinn-oder Titanverbindungen als Katalysatoren, z.B. aus den US-Patentschriften 2 727 881, 2 822 348 und 2 951 060.

Die Aufgabe der vorliegenden Erfindung bestand darin, geeignete Katalysatoren oder Katalysatorsysteme zu entwickeln, die ohne wesentliche Veränderung der Schäumzeiten eine rasche Durchhärtung der Polyurethan-Systeme bei der Formkörperherstellung gewährleisten.

Diese Aufgabe konnte überraschenderweise gelöst werden mit Hilfe eines Verfahrens zur Herstellung von kompakten oder zelligen Polyurethan-Elastomeren durch Umsetzung von

a) organischen Polyisocyanaten mit

b) höhermolekularen Verbindungen mit mindestens 2 reaktiven Wasserstoffatomen und gegebenenfalls

c) Kettenverlängerungs-und/oder Vernetzungsmitteln in Gegenwart von

d) Katalysatoren und gegebenenfalls

e) Katalysatoren und gegebenenfalls

e) Treibmitteln,

f) Hilfsmitteln und/oder Zusatzstoffen das dadurch gekennzeichnet ist, daß man als Katalysatoren Polyesterpolyole (d) verwendet, die hergestellt werden durch Polykondensation von organischen Polycarbonsäuren mit mehrwertigen Alkoholen in Gegenwart von Titan-und/oder Zinnverbindungen als Katalysator bei Temperaturen von 150 bis 250°C.

Gegenstand der Erfindung ist ferner die Verwendung von Polyester-polyolen mit einer Funktionalität von 2 bis 4, einer Hydroxylzahl von 20 bis 300 und einer Säurezahl von kleiner als 10, hergestellt durch Polykondensation von organischen Polycarbonsäuren mit mehrwertigen Alkoholen in Gegenwart von 0,002 bis 5 Gew.%, bezogen auf das Gewicht der Mischung aus Polycarbonsäuren und mehrwertigen Alkoholen, mindestens einer Titan-und/oder Zinnverbindung, vorzugsweise eines organischen Titansäureesters der Formel $Ti(OR)_4$ , in der R einen linearen, verzweigten oder cyclischen Alkylrest mit 1 bis 6 Kohlenstoffatomen bedeutet, als Katalysator bei Temperaturen von 150 bis 250°C, in einer Menge von 0,1 bis 10 Gew.-Teilen pro 100 Gew.-Teilen der höhermolekularen Verbindungen mit mindestens 2 reaktiven Wasserstoffatomen (b) als Katalysator zur Herstellung von Kunststoffen nach dem Polyisocyanat-polyadditionsverfahren, vorzugsweise von Polyurethan-Kunststoffen.

Durch den Zusatz der erfindungsgemäß verwendbaren, Zinn-oder insbesondere Titanverbindungen aufweisenden Polyester-polyole in geringen Mengen zu weniger reaktiven höhermolekularen Verbindungen mit mindestens 2 Zwerwitinoff aktiven Wasserstoffatomen wird die Reaktivität dieser Produkte deutlich gesteigert, so daß bei Polyurethan-Elastomer-Systemen ohne Beeinflussung der Schäumzeiten, die Durchhärtung bei der Formkörperherstellung deutlich verbessert werden kann. Die Durchhärtung der Polyurethan-Elastomere wird jedoch überraschenderweise nur dann verbessert, wenn die Polyester-polyole bei der Herstellung mit Zinn-und/oder Titanverbindungen katalysiert wurden oder wenn nach bekannten Verfahren hergestellte Polyester-polyole mit Zinn-und/oder Titanverbindungen nachträglich bei einer Temperatur von mindestens 150°C, zweckmäßigerweise für mehr als 20 Minuten, behandelt wurden. Ein einfaches Lösen der Titan-und/oder Zinnverbindungen bei Raumtemperatur ohne die zusätzliche Wärmebehandlung führt zu keiner Verbesserung der Durchhärtung der Polyurethane.

Zu den für das erfindungsgemäße Verfahren verwendbaren Ausgangskomponenten (a), (b) und (d) sowie gegebenenfalls (c), (e) und (f) zur Herstellung der kompakten oder vorzugsweise zelligen Polyurethan-Elastomeren ist folgendes auszuführen:

a) Als organische Polyisocyanate kommen die an sich bekannten aliphatischen, cycloaliphatischen, araliphatischen und vorzugsweise aromatischen mehrwertigen Isocyanate in Frage.

Im einzelnen seien beispielhaft genannt: Alkylendiisocyanate mit 4 bis 12 Kohlenstoffatomen im Alkylenrest, wie 1,12-Dodecan-diisocyanat, 2-Ethyl-tetramethylen-diisocyanat-1,4, 2-Methyl-pentamethylen-diisocyanat-1,5-diisocyanat, Tetramethylen-diisocyanat-1,4 und vorzugsweise Hexamethylen-diisocyanat-1,6; cycloaliphatische Diisocyanate, wie Cyclohexan-1,3-und -1,4-diisocyanat sowie beliebige Gemische dieser Isomeren, 1-Isocyanato-3,3,5-trimethyl-5-isocyanatomethyl-cyclohexan (Isophoron-diisocyanat), 2,4-und 2,6-Hexahydrotoluylen-diisocyanat sowie die entsprechenden Isomerengemische, 4,4'-, 2,2'-und 2,4'-Dicyclohexylmethan-diisocyanat sowie die entsprechenden Isomerengemische und vorzugsweise aromatischen Di-und Polyisocyanate, wie z.B. 2,4-und 2,6-Toluylen-diisocyanat und die entsprechenden Isomerengemische, 4,4'-, 2,4'-und 2,2'-Diphenylmethan-diisocyanat und die entsprechenden Isomerengemische, Mischungen aus 4,4'-und 2,4'-Diphenylmethan-diisocyanaten, Polyphenyl-polymethylen-polyisocyanate, Mischungen aus 4,4'-, 2,4'-und 2,2'-Diphenylmethan-diisocyanaten und Polyphenyl-polymethylen-polyisocyanaten (Roh-MDI) und Mischungen aus Roh-MDI und Toluylen-diisocyanaten. Die organischen Di-und Polyisocyanate können einzeln oder in Form von Mischungen eingesetzt werden.

Häufig werden auch sogenannte modifizierte mehrwertige Isocyanate, d.h. Produkte, die durch chemische Umsetzung organischer Di-und/oder Polyisocyanate erhalten werden, verwendet. Beispielhaft genannt seien Ester-, Harnstoff-, Biuret-, Allophanat-, Carbodiimid-, Isocyanurat-und/oder Urethangruppen enthaltende Di-und/oder Polyisocyanate. Im einzelnen kommen beispielsweise in Betracht: Urethangruppen enthaltende organische, vorzugsweise aromatische Polyisocyanate mit NCO-Gehalten von 33,6 bis 15 Gew.%, vorzugsweise von 31 bis 21 Gew.%, bezogen auf das Gesamtgewicht, beispielsweise mit niedermolekularen Diolen, Triolen, Dialkylenglykolen, Trialkylenglykolen oder Polyoxyalkylenglykolen mit Molekulargewichten bis 800 modifiziertes 4,4'-Diphenylmethan-diisocyanat oder 2,4-bzw. 2,6-Toluylen-diisocyanat, wobei als Di-bzw. Polyoxyalkylen-glykole, die einzeln oder als Gemische eingesetzt werden können,

3

beispielsweise genannt seien: Diethylen-, Dipropylen-, Polyoxyethylen-, Polyoxypropylen-und Polyoxypropylen-polyoxyethylen-glykole. Geeignet sind auch NCO-Gruppen enthaltende Prepolymere mit NCO-Gehalten von 25 bis 9 Gew.%, vorzugsweise von 21 bis 14 Gew.%, bezogen auf das Gesamtgewicht, hergestellt aus den nachfolgend beschriebenen Polyether-und/oder vorzugsweise Polyester-polyolen und 4,4'-Diphenylmethan-diisocyanat, Mischungen aus 2,4'-und 4,4'-Diphenylmethan-diisocyanat, 2,4'-und/oder 2,6-Toluylen-diisocyanaten oder Roh-MDI. Bewährt haben sich ferner flüssige Carbodiimidgruppen und/oder Isocyanuratringe enthaltende Polyisocyanate mit NCO-Gehalten von 33,6 bis 15, vorzugsweise 31 bis 21 Gew.%, bezogen auf das Gesamtgewicht, z.B. auf Basis von 4,4'-, 2,4'-und/oder 2,2'-Diphenylmethan-diisocyanat und/oder 2,4-und/oder 2,6-Toluylen-diisocyanat.

Die modifizierten Polyisocyanate können miteinander oder mit unmodifizierten organischen Polyisocyanaten wie z.B. 2,4'-, 4,4'-Diphenylmethan-diisocyanat, Roh-MDI, 2,4-und/oder 2,6-Toluylen-diisocyanat gegebenenfalls gemischt werden.

Besonders bewährt haben sich als organische Polyisocyanate und daher kommen vorzugsweise zur Anwendung: NCO-Gruppen enthaltende Prepolymere mit einem NCO-Gehalt von 25 bis 9 Gew.%, insbesondere auf Basis von Polyether-oder Polyester-polyolen und einem oder mehreren Diphenylmethan-diisocyanat-Isomeren, vorteilhafterweise 4,4'-Diphenylmethandiisocyanat und/oder modifizierte Urethangruppen enthaltende organische Polyisocyanate mit einem NCO-Gehalt von 33,6 bis 15 Gew.%, insbesondere auf Basis von 4,4'-Diphenylmethan-diisocyanat oder Diphenylmethan-diisocyanat-Isomerengemischen.

b) Als höhermolekulare Verbindungen b) mit mindestens zwei reaktiven Wasserstoffatomen werden zweckmäßigerweise solche mit einer Funktionalität von 2 bis 8, vorzugsweise 2 bis 4 und einem Molekulargewicht von 800 bis 8000, vorzugsweise von 1200 bis 6000 verwendet. Bewährt haben sich z.B. Polyether-polyamine und/oder vorzugsweise Polyole ausgewählt aus der Gruppe der Polyether-polyole, Polyesterpolyole, Polythioether-polyole, Polyesteramide, hydroxylgruppenhaltigen Polyacetale und hydroxylgruppenhaltigen aliphatischen Polycarbonate oder Mischungen aus mindestens zwei der genannten Polyole. Vorzugsweise Anwendung finden Polyester-polyole und/oder Polyether-polyole.

Geeignete Polyester-polyole können beispielsweise aus organischen Dicarbonsäuren mit 2 bis 12 Kohlenstoffatomen, vorzugsweise aliphatischen Dicarbonsäuren mit 4 bis 6 Kohlenstoffatomen und mehrwertigen Alkoholen, vorzugsweise Diolen, mit 2 bis 12 Kohlenstoffatomen, vorzugsweise 2 bis 6 Kohlenstoffatomen hergestellt werden. Als Dicarbonsäuren kommen beispielsweise in Betracht: Bernsteinsäure, Glutarsäure, Adipinsäure, Korksäure, Azelainsäure, Sebacinsäure, Decandicarbonsäure, Maleinsäure und Fumarsäure. Die Dicarbonsäuren können dabei sowohl einzeln als auch im Gemisch untereinander verwendet werden. Anstelle der freien Dicarbonsäuren können auch die entsprechenden Dicarbonsäurederivate, wie z.B. Dicarbonsäureester von Alkoholen mit 1 bis 4 Kohlenstoffatomen oder Dicarbonsäureanhydride eingesetzt werden. Vorzugsweise verwendet werden Dicarbonsäuregemische aus Bernstein-, Glutar-und Adipinsäure in Mengenverhältnissen von beispielsweise 20 bis 35 : 35 bis 50 : 20 bis 32 Gew.-Teilen, und insbesondere Adipinsäure. Beispiele für zwei-und mehrwertige Alkohole, insbesondere Diole sind: Ethandiol, Diethylenglykol, 1,2-bzw. 1,3-Propandiol, Dipropylenglykol, 1,4-Butandiol, 1,5-Pentandiol, 1,6-Hexandiol, 1,10-Decandiol, Glycerin und Trimethylolpropan. Vorzugsweise verwendet werden Ethandiol, Diethylenglykol, 1,4-Butandiol, 1,5-Pentandiol, 1,6-Hexandiol oder Mischungen aus mindestens zwei der genannten Diole, insbesondere Mischungen aus 1,4-Butandiol, 1,5-Pentandiol und 1,6-Hexandiol. Eingesetzt werden können ferner Polyester-polyole aus Lactonen, z.B. $\varepsilon$-Caprolacton oder Hydroxycarbonsäuren, z.B. $\omega$-Hydroxycapronsäure.

Zur Herstellung der Polyester-polyole können die organischen, z.B. aromatischen und vorzugsweise aliphatischen Polycarbonsäuren und/oder -derivate und mehrwertigen Alkohole katalysatorfrei oder vorzugsweise in Gegenwart von Veresterungskatalysatoren, zweckmäßigerweise in einer Atmosphäre aus Inertgasen, wie z.B. Stickstoff, Kohlenmonoxid, Helium, Argon u.a. in der Schmelze bei Temperaturen von 150 bis 250°C, vorzugsweise 180 bis 220°C gegebenenfalls unter vermindertem Druck bis zu der gewünschten Säurezahl, die vorteilhafterweise kleiner als 10, vorzugsweise kleiner als 2 ist, polykondensiert werden. Nach einer bevorzugten Ausführungsform wird das Veresterungsgemisch bei den obengenannten Temperaturen bis zu einer Säurezahl von 80 bis 30, vorzugsweise 40 bis 30, unter Normaldruck und anschließend unter einem Druck von kleiner als 500 mbar, vorzugsweise 50 bis 150 mbar, polykondensiert. Als Veresterungskatalysatoren kommen beispielsweise Eisen-, Cadmium-, Kobalt-, Blei-, Zink-, Antimon-, Magnesium-, Titan-und Zinnkatalysatoren in Form von Metallen, Metalloxiden oder Metallsalzen in Betracht. Die Polykondensation kann jedoch auch in flüssiger Phase in Gegenwart von Verdünnungs-und/oder Schleppmittel, wie z.B. Benzol, Toluol, Xylol oder Chlorbenzol, zur azeotropen Abdestillation des Kondensationswassers durchgeführt werden.

Zur Herstellung der Polyester-polyole werden die organischen Polycarbonsäuren und/oder -derivate und mehrwertigen Alkohole vorteilhafterweise im Molverhältnis von 1:1 bis 1,8, vorzugsweise 1:1,05 bis 1,2 polykondensiert.

Die erhaltenen Polyester-polyole besitzen vorzugsweise eine Funktionalität von 2 bis 4, insbesondere 2 bis 3 und ein Molekulargewicht von 800 bis 3000, vorzugsweise 1200 bis 3000 und insbesondere 1800 bis 2500.

Insbesondere als Polyole verwendet werden jedoch Polyether-polyole, die nach bekannten Verfahren, beispielsweise durch anionische Polymerisation mit Alkalihydroxiden, wie Natrium-oder Kaliumhydroxid oder Alkalialkoholaten, wie Natriummethylat, Natrium-oder Kaliumethylat oder Kaliumisopropylat als Katalysatoren oder durch kationische Polymerisation mit Lewis-Säuren, wie Antimonpentachlorid, Borfluorid-Etherat u.a. oder Bleicherde als Katalysatoren aus einem oder mehreren Alkylenoxiden mit 2 bis 4 Kohlenstoffatomen im Alkylenrest und einem Startermolekül, das 2 bis 8, vorzugsweise 2 bis 4 reaktive Wasserstoffatome gebunden enthält, hergestellt werden.

Geeignete Alkylenoxide sind beispielsweise Tetrahydrofuran, 1,3-Propylenoxid, 1,2-bzw. 2,3-Butylenoxid, Styroloxid, Epichlorhydrin und vorzugsweise Ethylenoxid und 1,2-Propylenoxid. Die Alkylenoxide können einzeln, alternierend nacheinander oder als Mischungen verwendet werden. Als Startermoleküle kommen beispielsweise in Betracht: Wasser, organische Dicarbonsäuren, wie Bernsteinsäure, Adipinsäure, Phthalsäure und Terephthalsäure, aliphatische und aromatische, gegebenenfalls N-mono-, N,N-und N,N'-dialkylsubstituierte Diamine mit 1 bis 4 Kohlenstoffatomen im Alkylrest, wie gegebenenfalls mono-und dialkylsubstituiertes Ethylendiamin, Diethylentriamin, Triethylentetramin, 1,3-Propylendiamin, 1,3-bzw. 1,4-Butylendiamin, 1,2-, 1,3-, 1,4-, 1,5-und 1,6-Hexamethylendiamin, Phenylendiamine, 2,4-und 2,6-Toluylendiamin und 4,4'-, 2,4'-und 2,2'-Diamino-diphenylmethan.

Als Startermoleküle kommen ferner in Betracht Alkanolamine, wie Ethanolamin, Diethanolamin, N-Methyl-und N-Ethyl-ethanolamin, N-Methyl-und N-Ethyl-diethanolamin und Triethanolamin, Ammoniak, Hydrazin und Hydrazide. Vorzugsweise verwendet werden mehrwertige, insbesondere zwei-und/oder dreiwertige Alkohole, wie Ethandiol, Propandiol-1,2 und -1,3, Diethylenglykol, Dipropylenglykol, Butandiol-1,4, Hexandiol-1,6, Glycerin, Trimethylol-propan, Pentaerythrit, Sorbit und Saccharose.

Die Polyether-polyole besitzen eine Funktionalität von vorzugsweise 2 bis 4 und insbesondere 2 und 3 und Molekulargewichte von 800 bis 8000, vorzugsweise 1200 bis 6000 und insbesondere 1800 bis 4000. Sie können ebenso wie die Polyester-polyole einzeln oder in Form von Mischungen verwendet werden. Ferner können sie mit den Polyester-polyolen sowie den hydroxylgruppenhaltigen Polyesteramiden, Polyacetalen, Polycarbonaten und/oder Polyether-polyaminen gemischt werden.

Als hydroxylgruppenhaltige Polyacetale kommen z.B. die aus Glykolen, wie Diethylenglykol, Triethylenglykol, 4,4'-Dihydroxyethoxy-diphenyldimethylmethan, Hexandiol und Formaldehyd herstellbaren Verbindungen in Frage. Auch durch Polymerisation cyclischer Acetale lassen sich geeignete Polyacetale herstellen.

Als Hydroxylgruppen aufweisende Polycarbonate kommen solche der an sich bekannten Art in Betracht, die beispielsweise durch Umsetzung von Diolen, wie Propandiol-(1,3), Butandiol-(1,4) und/oder Hexandiol-(1,6), Diethylenglykol, Triethylenglykol oder Tetraethylenglykol mit Diarylcarbonaten, z.B. Diphenylcarbonat oder Phosgen hergestellt werden können.

Zu den Polyesteramiden zählen z.B. die aus mehrwertigen gesättigten und/oder ungesättigten Carbonsäuren bzw. deren Anhydriden und mehrwertigen gesättigten und/oder ungesättigten Aminoalkoholen oder Mischungen aus mehrwertigen Alkoholen und Aminoalkoholen und/oder Polyaminen gewonnen, vorwiegend linearen Kondensate.

Geeignete Polyether-polyamine können aus den obengenannten Polyetherpolyolen nach bekannten Verfahren hergestellt werden. Beispielhaft genannt seien die Cyanoalkylierung von Polyoxyalkylen-polyolen und anschließende Hydrierung des gebildeten Nitrils (US 3 267 050) oder die Aminierung von Polyoxyalkylen-polyolen mit Aminen oder Ammoniak in Gegenwart von Wasserstoff und Katalysatoren (DE 12 15 373).

c) Die kompakten oder zelligen Polyurethan-Elastomeren können ohne oder unter Mitverwendung von Kettenverlängerungs-und/oder Vernetzungsmitteln hergestellt werden. Zur Modifizierung der mechanischen Eigenschaften, z.B. der Härte, hat sich jedoch der Zusatz von Kettenverlängerungsmitteln, Vernetzungsmitteln oder gegebenenfalls auch deren Gemische in Mengen von 2 bis 12 Gew.-Teilen, vorzugsweise von 4 bis 10 Gew.-Teilen, bezogen auf 100 Gew.-Teile der Komponente b) bewährt. Als Kettenverlängerungs-und/oder Vernetzungsmittel verwendet werden Diole und/oder Triole mit Molekulargewichten kleiner als 400, vorzugsweise von 60 bis 300. In Betracht kommen beispielsweise aliphatische, cycloaliphatische und/oder araliphatische Diole mit 2 bis 14, vorzugsweise 4 bis 10 Kohlenstoffatomen, wie z.B. Ethylenglykol, Propandiol-1,3, Decandiol-1,10, o-, m-, p-Dihydroxycyclohexan, Diethylenglykol, Dipropylenglykol und vorzugsweise Butandiol-1,4, Hexandiol-1,6 und Bis-(2-hydroxyethyl)-hydrochinon, Triole, wie 1,2,4-, 1,3,5-Trihydroxy-cyclohexan, Glycerin und Trimethylolpropan und niedermolekulare hydroxylgruppenhaltige Polyalkylenoxide auf Basis Ethylen-und/oder 1,2-Propylenoxid und den vorgenannten Diolen und/oder Triolen als Startermoleküle.

d) **Wesentliches Merkmal** der vorliegenden Erfindung ist die Mitverwendung von Polyester-polyolen als Katalysator, die hergestellt werden durch Polykondensation der vorgenannten organischen Polycarbonsäuren und mehrwertigen Alkohole in Gegenwart von Zinn-und/oder vorzugsweise Titanverbindungen als Katalysator bei Temperaturen von 150 bis 250°C. Erfindungsgemäß verwendbar im Sinne der Erfindung sind jedoch auch Polyester-polyole, die katalysatorfrei oder unter Verwendung beliebiger Veresterungskatalysatoren hergestellt und anschließend einer Behandlung mit Zinn-und/oder vorzugsweise Titanverbindungen, bei einer Temperatur von mindestens 150°C, vorzugsweise 150 bis 250°C und insbesondere 180 bis 220°C, zweckmäßigerweise für mehr als 10 Minuten, vorzugsweise 0,5 bis 12 Stunden und insbesondere 0,5 bis 4 Stunden, unterworfen wurden.

Die als Katalysator verwendbaren Polyester-polyole (d), die zur Herstellung der kompakten oder vorzugsweise zelligen Polyurethan-Elastomeren in einer Menge von 0,1 bis 10 Gew.-Teilen, vorzugsweise von 1 bis 5 Gew.-Teilen pro 100 Gew.-Teilen der höhermolekularen Verbindung mit mindestens 2 reaktiven Wasserstoffatomen b) eingesetzt werden, besitzen zweckmäßigerweise eine Funktionalität von 2 bis 4, vorzugsweise von 2 bis 3 und insbesondere von 2, eine Hydroxylzahl von 20 bis 300, vorzugsweise von 30 bis 200 und insbesondere von 40 bis 80 und eine Säurezahl von kleiner als 10, vorzugsweise kleiner als 2 und insbesondere kleiner als 1.

Die Polyester-polyole d) werden hergestellt, beispielsweise aus den vorgenannten organischen Polycarbonsäuren und/oder -derivaten und mehrwertigen Alkoholen, bei Temperaturen von 150 bis 250°C, vorzugsweise 180 bis 220°C und Reaktionszeiten von 2 bis 30 Stunden, vorzugsweise 6 bis 18 Stunden in Gegenwart von Zinn-und/oder vorzugsweise Titanverbindungen als Veresterungskatalysator sowie gegebenenfalls den vorgenannten anderen Reaktionsbedingungen.

Vorzugsweise Verwendung finden als organische Polycarbonsäuren aromatische und insbesondere aliphatische Dicarbonsäuren, wie z.B. Phthalsäure, Isophthalsäure, Terephthalsäure, Bernsteinsäure, Glutarsäure, Adipinsäure und Azelainsäure oder Mischungen aus aliphatischen, aromatischen oder aliphatischen und aromatischen Dicarbonsäuren und als mehrwertige Alkohole Alkandiole mit 2 bis 6 Kohlenstoffatomen wie z.B. Ethan-, 1,2-und 1,3-Propan-, 1,4-Butan-, 1,5-Pentan-, 1,6-Hexandiol und/oder Neopentylglykol und/oder Polyoxialkylen-diole mit Molekulargewichten von 96 bis 600, vorzugsweise 96 bis 300 auf der Grundlage von Ethylenoxid, 1,2-Propylenoxid und/oder Tetrahydrofuran wie z.B. Diethylen-, Triethylen-, Tetraethylen-glykol, Dipropylen-, Tripropylen-glykol, Dibutylen-, Tributylen-und Tetrabutylen-glykol sowie deren Gemische und gemischte Polyoxialkylen-glykole wie z.B. Polyoxiethylen-polyoxibutylen-glykole und Polyoxipropylen-polyoxibutylen-glykole. Gegebenenfalls kann es jedoch zur Einstellung einer höheren Funktionalität und bestimmten mechanischen Eigenschaften in den Polyurethan-Elastomeren zweckmäßig sein, zusätzlich zu den organischen Dicarbonsäuren und Diolen in untergeordneten Mengen, beispielsweise in Mengen von 0 bis 15 Gew.%, vorzugsweise 0 bis 5 Gew.% höherwertige Polycarbonsäuren, wie z.B. Tri-und/oder Tetracarbonsäuren, und insbesondere 3-und/oder 4-wertige Alkohole, wie z.B. Glycerin, Trimethylolpropan und/oder Pentaerythrit bei der Polyester-polyolherstellung mitzuverwenden.

Als Veresterungskatalysatoren in Betracht kommen Zinn-II-und/oder Zinn-IV-Verbindungen, wie z.B. Zinn-II-chlorid, Zinndioctoat oder Dibutylzinndilaurat und vorzugsweise Titanverbindungen, insbesondere ortho-Titanate der Formel $Ti(OR)_4$, in der R einen cyclischen, vorzugsweise einen verzweigten und insbesondere einen linearen Alkylrest mit 1 bis 6 Kohlenstoffatomen, vorzugsweise 1 bis 4 Kohlenstoffatomen bedeutet. Als geeignete ortho-Titanate seien beispielhaft genannt: Tetramethyl-, Tetraethyl-, Tetra-n-butyl-, Tetra-isobutyl-, Tetra-sek.-butyl-, Tetra-tert.-butyl-, Tetra-n-pentyl-, Tetra-n-pentenyl-und Tetra-n-hexyl-titanat. Als Veresterungskatalysator besonders bewährt hat sich und daher vorzugsweise eingesetzt wird Tetra-n-butyl-titanat.

Die Veresterungskatalysatoren, die in Mengen von 0,002 bis 5 Gew.%, vorzugsweise von 0,1 bis 1 Gew.%, bezogen auf das Gewicht der Mischung aus Polycarbonsäuren und/oder -derivaten und mehrwertigen Alkoholen, Anwendung finden, können dem Polykondensationsgemisch zu Beginn der Veresterung, im Laufe der Veresterung kontinuierlich oder stufenweise oder gegen Ende der Veresterung einverleibt werden. Ferner können, wie bereits dargelegt wurde, auch katalysatorfrei oder mit anderen Veresterungskatalysatoren hergestellte Polyester-polyole nachträglich bei Temperaturen über 150°C mit den erfindungsgemäß verwendbaren Zinn-und/oder vorzugsweise Titanverbindungen behandelt werden.

Zur Herstellung der kompakten oder zelligen Polyurethan-Elastomeren können ausschließlich Zinn-und/oder Titanverbindungen enthaltende Polyester-polyole d) als Katalysator eingesetzt werden. Nach einer bevorzugten Ausführungsform werden als Katalysator jedoch Kombinationen aus den Polyester-polyolen d) und tertiären Aminen verwendet, wobei insbesondere Katalysatorkombinationen Verwendung finden, die bestehen aus

0,001 bis 5 Gew.-Teilen, vorzugsweise 0,01 bis 2 Gew.-Teilen eines tertiären Amins und

0,1 bis 5 Gew.-Teilen, vorzugsweise 1 bis 3 Gew.-Teilen mindestens eines Zinn-und/oder Titanverbindungen enthaltenden Polyesterpolyols d) pro 100 Gew.-Teilen der Aufbaukomponente b).

Als tertiäre Amine hierfür kommen beispielsweise in Betracht: tertiäre Alkylamine wie z.B. Triethylamin, Tributylamin, Dimethylbenzylamin, N,N,N',N'-Tetraalkyl-alkylendiamine mit 1 bis 2 C-Atomen im Alkylrest und 2 bis 6 C-Atomen im Alkylenrest, wie z.B. N,N,N',N'-Tetramethyl butylen-diamin, Pentaalkyl-dialkylentriamine, wie z.B. N,N,N',N'',N''-Pentamethyl-diethylentriamin, N,N,N',N'-Tetramethyl-diaminoethylether, Bis-(dimethylaminopropyl)-harnstoff, N-Methyl-, N-Ethyl-, N-Cyclohexylmorpholin, N,N'-Dimethyl-, N,N'-Diethyl-piperazin, N,N'-Dimethylaminoethyl-piperazin, N-Alkyl-piperidine, wie z.B. Ethyl-oder Methylpiperidin, 1,2-Dimethylimidazol, 1-Aza-bicyclo-(3,3,0)-octan und vorzugsweise 1,4-Diaza-bicyclo-(2.2.2)-octan, Alkanolaminverbindungen, wie z.B. Triethanolamin, Triisopropanolamin, N-Methyl-und N-Ethyldiethanolamin und Dimethylethanolamin und Tris-(dialkylaminoalkyl)-s-hexahydrotriazine, wie z.B. Tris-(N,N-dimethylaminopropyl)-s-hexahydrotriazin. Die tertiären Amine können ebenso wie die erfindungsgemäß verwendbaren Polyester-polyole einzeln oder in Form von Mischungen verwendet werden. Vorzugsweise eingesetzt werden 0,001 bis 5 Gew.%, insbesondere 0,5 bis 2 Gew.% tertiäres Amin oder Amingemisch als Katalysator bzw. 0,11 bis 10 Gew.%, insbesondere 1,5 bis 5 Gew.% Katalysatorkomination, bezogen auf das Gewicht der Aufbaukomponente b).

e) Als Treibmittel zur Herstellung der zelligen Polyurethan-Elastomeren werden zweckmäßigerweise niedrig siedende Flüssigkeiten verwendet, die unter dem Einfluß der exothermen Polyadditionsreaktion verdampfen. Geeignet sind Flüssigkeiten, welche gegenüber dem organischen Polyisocyanat inert sind und Siedepunkte unter 100°C aufweisen. Beispiele derartiger, vorzugsweise verwendeter Flüssigkeiten sind halogenierte Kohlenwasserstoffe, wie Methylenchlorid, Trichlorfluormethan, Dichlordifluormethan, Dichlormonofluormethan, Dichlortetrafluorethan und 1,1,2-Trichlor-1,2,2-trifluorethan. Auch Gemische dieser niedrigsiedenden Flüssigkeiten untereinander und/oder mit anderen substituierten oder unsubstituierten Kohlenwasserstoffen können verwendet werden.

Als Treibmittel eignet sich auch Wasser, das mit den Polyisocyanaten unter Bildung von Kohlendioxid und Polyharnstoffgruppen reagiert und dadurch die Druckfestigkeit der Endprodukte beeinflußt. Da die in den Polyester-und Polyether-polyolen als Nebenprodukt enthaltene Wassermenge meist ausreicht, bedarf es vorzugsweise keiner separaten Wasserzugabe. Sofern jedoch der Polyurethan-Formulierung zusätzlich Wasser einverleibt werden muß, wird dieses üblicherweise in Mengen von 0,05 bis 1 Gew.%, vorzugsweise von 0,1 bis 0,5 Gew.%, bezogen auf das Gewicht der Aufbaukomponente b) verwendet.

Die zweckmäßigste Menge an niedrigsiedender Flüssigkeit zur Herstellung der zelligen Polyurethan-Elastomeren hängt ab von der Dichte, die man erreichen will und der gegebenenfalls eingesetzten Wassermenge. Im allgemeinen liefern Mengen von 1 bis 10 Gew.-Teilen; vorzugsweise von 2 bis 6 Gew.-Teilen, bezogen auf 100 Gew.-Teile der Komponente b) zufriedendstellende Ergebnisse.

f) Der Reaktionsmischung können gegebenenfalls auch noch Hilfsmittel und/oder Zusatzstoffe f) einverleibt werden. Genannt seien beispielsweise oberflächenaktive Substanzen, Füllstoffe, Farbstoffe, Pigmente, Flammschutzmittel, Trennmittel, Hydrolyseschutzmittel, fungistatisch und bakteriostatisch wirkende Substanzen.

Als oberflächenaktive Substanzen kommen Verbindungen in Betracht, welche zur Unterstützung der Homogenisierung der Ausgangsstoffe dienen. Genannt seien beispielsweise Emulgatoren, wie die Natriumsalze von Ricinusölsulfaten oder von Fettsäuren, sowie Salze von Fettsäuren mit Aminen, z.B. ölsaures Diethylamin oder stearinsaures Diethanolamin, Salze von Sulfonsäuren, z.B. Alkali-oder Ammoniumsalze von Dodecylbenzol-oder Dinaphthylmethandisulfonsäure und Ricinolsäure. Die oberflächenaktiven Substanzen werden üblicherweise in Mengen von 0,01 bis 5 Gew.-Teilen, bezogen auf 100 Gew.-Teile der Aufbaukomponente b), angewandt.

Als Füllstoffe, insbesondere verstärkend wirkende Füllstoffe sind die an sich bekannten üblichen organischen und anorganischen Füllstoffe, Verstärkungsmittel, Beschwerungsmittel, Mittel zur Verbesserung des Abriebverhaltens in Anstrichfarben, Beschichtungsmittel usw. zu verstehen. Im einzelnen seien beispielhaft genannt: anorganische Füllstoffe wie silikatische Mineralien, beispielsweise Schichtsilikate, wie Antigorit, Serpentin, Hornblenden, Amphibole, Christotil, Talkum; Metalloxide, wie Kaolin, Aluminiumoxide, Titanoxide und Eisenoxide, Metallsalze wie Kreide, Schwerspat und anorganische Pigmente, wie Cadmiumsulfid, Zinksulfid sowie Asbestmehl u.a. Vorzugsweise verwendet werden Kaolin (China Clay). Aluminiumsilikat und Copräzipitate aus Bariumsulfat und Aluminiumsilikat sowie natürliche und synthetische faserförmige Mineralien wie Asbest und Wollastonit. Als organische Füllstoffe kommen beispielsweise in Betracht: Kohle, Melamin, Kollophonium, Cyclopentadienylharze und Pfropfpolymerisate auf Styrol-Acrylnitrilbasis, die durch in situ Polymerisation von Acrylnitril-Styrol-Mischungen in Polyether-polyolen analog den Angaben der deutschen Patentschriften 11 11 394, 12 22 669 (US 3 304 273, 3 383 351, 3 523 093), 11 52 536 (GB 1 040 452) und 11 52 537 (GB 987 618) hergestellt werden, sowie Filler-polyoxy alkylen-polyole, bei denen wäßrige Polymerdispersionen in Polyoxyalkylen-polyol-dispersionen übergeführt werden.

Die anorganischen und organischen Füllstoffe können einzeln oder als Gemische verwendet werden. Vorzugsweise Anwendung finden stabile Füllstoff-Polyoxyalkylen-polyol-Dispersionen, bei denen die Füllstoffe in Gegenwart von Polyoxyalkylen-polyolen in situ mit hohen örtlichen Energiedichten auf eine Teilchengröße kleiner als 7 µm zerkleinert und hierbei gleichzeitig dispergiert werden oder Pfropfpolymerisate auf Styrol-Acrylnitrilbasis.

Die anorganischen und/oder organischen Füllstoffe werden der Reaktionsmischung vorteilhafterweise in Mengen von 0,5 bis 50 Gew.%, vorzugsweise 1 bis 40 Gew.%, bezogen auf das Gewicht der Komponenten a) bis c), einverleibt.

Nähere Angaben über die obengenannten anderen üblichen Hilfs-und Zusatzstoffe sind der Fachliteratur, beispielsweise der Monographie von J.H. Saunders und K.C. Frisch "High Polymers" Band XVI, Polyurethanes, Teil 1 und 2, Verlag Interscience Publishers 1962 bzw. 1964, oder dem Kunststoff-Handbuch, Band VII, Polyurethane 1. und 2. Auflage, Carl-Hanser-Verlag, München 1966 und 1983, zu entnehmen.

Zur Herstellung der Polyurethan-Elastomeren werden die organischen Polyisocyanate a), höhermolekularen Verbindungen mit mindestens zwei reaktiven Wasserstoffatomen b), gegebenenfalls Kettenverlängerungs-und/oder Vernetzungsmitteln c) und Zinn-und/oder Titanverbindungen enthaltenden Polyester-polyole d) in solchen Mengen zur Umsetzung gebracht, daß das Äquivalenz-Verhältnis von NCO-Gruppen der Polyisocyanate a) zur Summe der reaktiven Wasserstoffatome der Komponenten b), d) und gegebenenfalls c) 1:0,85 bis 1,25, vorzugsweise 1:0,95 bis 1,15 und insbesondere 1:0,98 bis 1,05 beträgt.

Die Herstellung der Polyurethan-Elastomeren erfolgt nach dem Prepolymer-oder dem one shot-Verfahren mit Hilfe der Reaktionsspritzguß-Technik oder vorzugsweise der Niederdruck-Verfahrenstechnik durch Einbringen der Reaktionsmischung in ein geschlossenes oder offenes Formwerkzeug, das gegebenenfalls nach dem Füllen bis zum Erreichen einer ausreichenden Anfangsfestigkeit (Greenstrength) des Formteils geschlossen wird.

Bei Verwendung einer Mischkammer mit mehreren Zulaufdüsen können die Ausgangskomponenten einzeln zugeführt und in der Mischkammer intensiv vermischt werden. Als besonders vorteilhaft hat es sich erwiesen, nach dem Zweikomponenten-Verfahren zu arbeiten und gegebenenfalls die Kettenverlängerungs-und/oder Vernetzungsmittel c) in den höhermolekularen Verbindungen mit mindestens zwei reaktiven Wasserstoffatomen b) zu lösen und mit dem Katalysator oder der Katalysatorkombination d) sowie gegebenenfalls Treibmittel f), Hilfsmitteln und/oder Zusatzstoffen g) in der Komponente (A) zu vereinigen und als Komponente (B) die organischen Polyisocyanate a), vorzugsweise die modifizierten organischen Polyisocyante und/oder NCO-Gruppen enthaltenden Prepolymeren zu verwenden. Vorteilhaft ist hierbei beispielsweise, daß die zwei Komponenten bei der Verarbeitung nur noch in den entsprechenden Mengen gemischt werden müssen.

Die Menge des in das Formwerkzeug eingebrachten Reaktionsgemisches wird so bemessen, daß die kompakten Polyurethan-Elastomeren eine Dichte von 0,9 bis 1,4 g/cm$^3$, vorzugsweise von 1,0 bis 1,2 g/cm$^3$ besitzen, wobei gegebenenfalls zellige Elastomere gebildet werden können, beispielsweise durch in das Reaktionsgemisch eingeschlagene Gase, insbesondere Luft oder durch Verwendung von feuchten Ausgangsstoffen b) und die zelligen Polyurethan-Elastomeren, die durch gezielte Zugabe von inerten physikalisch wirkenden Treibmittel oder Wasser und physikalisch wirkenden Treibmitteln erhalten werden, eine Dichte von 0,3 bis 0,8 g/cm$^3$, vorzugsweise von 0,45 bis 0,70 g/cm$^3$ aufweisen. Die Ausgangskomponenten werden mit einer Temperatur von 15 bis 70°C. vorzugsweise von 20 bis 60°C in das Formwerkzeug, das zweckmäßigerweise aus metallischen Werkstoffen besteht und temperierbar ist, eingebracht. Die Formwerkzeugtemperatur beträgt üblicherweise 20 bis 90°C, vorzugsweise 25 bis 65°C. Gegebenenfalls kann es vorteilhaft sein, übliche Formtrennmittel, beispielsweise auf Wachs-oder Silikonbasis, oder innere Formtrennmittel, zur Verbesserung der Entformung, einzusetzen. Die Verdichtungsgrade zur Herstellung von Formkörpern aus zelligen Polyurethan-Elastomeren liegen zwischen 1,1 und 10, vorzugsweise zwischen 2 und 6.

Die nach dem erfindungsgemäßen Verfahren erhältlichen kompakten Polyurethan-Elastomeren eignen sich zur Verwendung in der Automobilindustrie, beispielsweise als Stoßstangenabdeckungen und Karosserieteile wie Kotflügel, Spoiler und Radkästenverbreiterungen sowie technische Gehäuseteile und Laufrollen, die zelligen Polyurethan-Elastomeren finden beispielsweise als Armlehnen, Kopfstützen, Sicherheitsabdeckungen im Automobilinnenraum sowie als Motorrad-und Fahrradsättel, Sitzkissen, Deckschichten in Verbundschaumstoffen und insbesondere mit Dichten von 0,30 bis 0,70 g/cm$^3$ als Schuhsohlen Anwendung.

Beispiel 1

66,67 Gew.-Teile Adipinsäure und eine Mischung aus 11,77 Gew.-Teilen Butandiol-1,4, 25,57 Gew.-Teilen Pentandiol-1,5 und 13,77 Gew.-Teilen Hexandiol-1,6 wurden bei Raumtemperatur unter Rühren in einer Stickstoffatmosphäre gemischt, das Veresterungsgemisch langsam auf 210°C erhitzt und bei dieser Temperatur bis zur Abtrennung von 15,9 Gew.-Teilen Wasser (ungefähr 50 Stunden) polykondensiert. Das erhaltene Butandiol-Pentandiol-Hexandiol-polyadipat besaß folgende Kennzahlen:

Hydroxylzahl:     55,1 mg KOH/g

Säurezahl:     0,2 mg KOH/g,

Viskosität bei 25°C:     6497 m · Pas

Viskosität bei 75°C:     644 m · Pas

Dem erhaltenen Butandiol-Pentandiol-Hexandiol-polyadipat wurden bei Raumtemperatur 500 ppm Tetra-n-butyltitanat einverleibt, das Gemisch 1,5 Stunden auf 210°C erwärmt und danach abkühlen gelassen.

Vergleichsbeispiel A

Man verfuhr analog den Angaben des Beispiels 1, erwärmte das Butandiol-Pentandiol-Hexandiol-polyadipat nach Zugabe von 500 ppm Tetra-n-butyltitanat jedoch auf nur 65°C.

Beispiel 2

Man verfuhr analog den Angaben des Beispiels 1 und kondensierte das Veresterungsgemisch bei 210°C bis zu einer Säurezahl von 13. Nun fügte man 500 ppm Tetra-n-butyltitanat hinzu und kondensierte bis zur Abtrennung von 15,9 Gew.-Teilen Wasser. Die Gesamtkondensationszeit betrug ungefähr 10 Stunden. Das erhaltene Butandiol-Pentandiol-Hexandiol-polyadipat besaß folgende Kenndaten:

Hydroxylzahl:     56,2 mg KOH/g

Säurezahl:     0,4 mg KOH/g,

Viskosität bei 25°C:     6371 m · Pas

Viskosität bei 75°C:     621 m · Pas

Beispiel 3

Dem in Beispiel 1 beschriebenen Veresterungsgemisch wurden zu Beginn der Polykondensation bei Raumtemperatur 500 ppm Tetra-n-butyltitanat hinzugefügt. Anschließend wurde bei 210°C so lange polykondensiert bis 15,9 Gew.-Teile Kondensationswasser abgetrennt waren. Die Kondensationszeit betrug ungefähr 8 Stunden. Das erhaltene Butandiol-Pentandiol-Hexandiol-polyadipat besaß folgende Kenndaten:

Hydroxylzahl:     57,6 mg KOH/g

Säurezahl:     0,6 mg KOH/g,

Viskosität bei 25°C:     6234 m · Pas

Viskosität bei 75°C:     615 m · Pas

Beispiele 4 bis 7

Man verfuhr analog den Angaben des Beispiels 3, verwandte jedoch die in Tabelle 1 genannten Katalysatoren und -mengen.

Vergleichsbeispiel B

Einer difunktionellen Polyoxipropylen-polyoxiethylen-polyolmischung mit einer durchschnittlichen Hydroxylzahl von 26 wurden bei 140°C 1000 ppm Tetra-n-butyltitanat einverleibt.

Beispiele 8 bis 10 und Vergleichsbeispiele C bis D

Herstellung von zelligen Polyurethan-Elastomeren

A-Komponente

Mischung aus
Gew.-Teilen eines Ethylenglykol-Butandiol-1,4-polyadipat mit der Hydroxylzahl von 56,
Gew.-Teilen eines Tetra-n-butyltitanat enthaltenden Polyesterpolyols,
1,0 Gew.-Teilen Triethylendiamin (33 gew.%ig, gelöst in Ethylenglykol),
3,9 Gew.-Teilen Antistatikum,
0,16 Gew.-Teilen Silkonöl (DC 193 der Dow Corning),
1,5 Gew.-Teilen Farbpaste,
1,8 Gew.-Teilen 1,1,2-Trichlor-2,2,1-trifluorethan,
8,95 Gew.-Teilen Ethylenglykol und
0,28 Gew.-Teilen Wasser.


B-Komponente:

NCO-Gruppen enthaltendes Prepolymeres mit einem NCO-Gehalt von 18,7 Gew.%, hergestellt durch Umsetzung von 65 Gew.-Teilen 1,4-Butandiol-Ethylenglykol-polyadipat (OH-Zahl 56) mit 100 Gew.-Teilen 4,4'-Diphenylmethandiisocyanat.

100 Gew.-Teile der A-Komponente und 93 Gew.-Teile der B-Komponente - entsprechend einem NCO-Index von 100 - wurden mit Hilfe einer Niederdruck-Dosiermaschine vom Typ F20 der Elastogran Maschinenbau bei 40°C gemischt.

260 g der erhaltenen Reaktionsmischung wurden in ein auf 45°C temperiertes Metallformwerkzeug mit den Abmessungen 200x200x10 mm eingetragen und in dem geschlossenen Formwerkzeug aushärten gelassen. Die Formstandzeit betrug 4 sek.

Die eingesetzten Ethylenglykol-Butandiol-1,4-polyadipatmengen und die Art und Menge der verwendeten Tetra-n-butyltitanat haltigen Polyester-polyole sowie die Schaumzeiten und an den erhaltenen Polyurethan-Elastomeren gemessenen Knickzeiten sind in Tabelle 2 zusammengefaßt.

Die Beispiele und Vergleichsbeispiele zeigen, daß durch den Zusatz der Tetra-n-butyltitanat enthaltenden Polyester-polyole die Knickzeit deutlich reduziert werden konnte.

Beispiele 11 und 12 und Vergleichsbeispiele E und F

Hergestellung von zelligen Polyurethan-Elastomeren

A-Komponente:

Mischung aus
Gew.-Teilen einer difunktionellen Polyoxipropylen-polyoxiethylen-polyolmischung mit einer durchschnittlichen Hydroxylzahl von 26,
Gew.-Teilen eines Tetra-n-butyltitanat enthaltenden Polyesterpolyols,
8,74 Gew.-Teilen Butandiol-1,4,
1,63 Gew.-Teilen Triethylendiamin (25 gew.%ig, gelöst in Butandiol-1,4),
0,016 Gew.-Teilen Dibutylzinndilaurat,
0,09 Gew.-Teilen Silikonöl (DC 193 der Dow Corning) und
5,49 Gew.-Teilen Trichlorfluormethan,


B-Komponente: analog Beispiele 8 bis 10

100 Gew.-Teile der A-Komponente und 51,9 Gew.-Teile der B-Komponente wurden analog den Angaben der Beispiele 8 bis 10 zu Prüfplatten verarbeitet.

Die eingesetzte Polyoxipropylen-polyoxiethylen-polyolmenge und die Art und Menge des verwendeten Tetra-n-butyltitanat haltigen Polyester-polyols sowie die Schäumzeiten und an den Prüfplatten aus Polyurethan-Elastomeren gemessenen Knickzeiten sind in Tabelle 4 zusammengefaßt.

Die Beispiele und Vergleichsbeispiele zeigen, daß durch den Zusatz der Tetra-n-butyltitanat enthaltenden Polyester-polyole die Knickzeit deutlich reduziert werden konnte.

Tabelle 1

| Beispiel | 4 | 5 | 6 | 7 |
|---|---|---|---|---|
| Tetra-n-butyltitanat [ppm] | 1000 | 5000 | – | – |
| Metallorganische Zinnverbindung [ppm] (®Swedcat 3 der Firma Swedstab AB) | – | – | 1000 | – |
| Metallorganische Zinnverbindung [ppm] (®Swedcat 5 der Firma Swedstab AB) | – | – | – | 1000 |
| Polykondensationszeit [Std] | 7 | 6 | 7 | 8 |
| Hydroxylzahl [mg KOH/g] | 55,3 | 53,6 | 54,1 | 55,4 |
| Säurezahl [mg KOH/g] | 0,2 | 0,7 | 0,1 | 0,2 |
| Viskosität bei 25°C [m·Pas] | 7061 | 7409 | 7504 | 7109 |
| Viskosität bei 75°C [m·Pas] | 644 | 715 | 706 | 681 |

Tabelle 2

| Beispiel | | 8 | 9 | 10 | | |
|---|---|---|---|---|---|---|
| <u>Vergleichsbeispiel</u> | | | | | <u>C</u> | <u>D</u> |
| Ethylenglykol-butandiol-polyadipat | [Gew.-Teile] | 80,3 | 77,8 | 72,8 | 82,8 | 82,03 |
| Polyester-polyol nach Beispiel 4 | [Gew.-Teile] | 2,5 | 5,0 | – | – | – |
| Polyester-polyol nach Beispiel 2 | [Gew.-Teile] | – | – | 10 | – | – |
| Polyester-polyol nach Vgl.bsp. A | [Gew.-Teile] | – | – | – | – | 2,5 |
| | | | | | | |
| Schäumzeiten: | | | | | | |
| Startzeit | [sec] | 8 | 8 | 8 | 9 | 8 |
| Abbindezeit | [sec] | 23 | 25 | 24 | 25 | 24 |
| Steigzeit | [sec] | 41 | 42 | 43 | 48 | 46 |
| Dichte | [g/cm³] | 0,27 | 0,27 | 0,27 | 0,27 | 0,27 |
| Knickzeiten | [min] | 5' | 4' | <4' | 6' 30" | 6' 30" |

0 269 873

Tabelle 3

| | Beispiel | | Vergleichsbeispiel | |
|---|---|---|---|---|
| | 11 | 12 | E | F |
| Polyoxipropylen-polyoxiethylen-polyolmischung [Gew.-Teile] | 81,48 | 78,48 | 83,98 | 78,98 |
| Polyester-polyol nach Beispiel 4 [Gew.-Teile] | 2,5 | 5,0 | - | - |
| Polyoxipropylen-polyoxiethylen-polyolmischung nach Vgl.bsp. B [Gew.-Teile] | - | - | - | 5,0 |
| Schäumzeiten: | | | | |
| Startzeit [sec] | 13 | 13 | 13 | 13 |
| Abbindezeit [sec] | 20 | 25 | 20 | 24 |
| Steigzeit [sec] | 37 | 40 | 40 | 38 |
| Dichte [g/cm³] | 0,23 | 0,23 | 0,23 | 0,23 |
| Knickzeiten [min] | 3' 30" | <3' | 4' 30" | 4' 45" |

## Ansprüche

1. Verfahren zur Herstellung von kompakten oder zelligen Polyurethan-Elastomeren durch Umsetzung von

a) organischen Polyisocyanaten mit

b) höhermolekularen Verbindungen mit mindestens 2 reaktiven Wasserstoffatomen und gegebenenfalls

c) Kettenverlängerungs-und/oder Vernetzungsmitteln in Gegenwart von

d) Katalysatoren und gegebenenfalls

e) Treibmitteln,

f) Hilfsmitteln und/oder Zusatzstoffen

dadurch gekennzeichnet, daß man als Katalysatoren Polyester-polyole (d) verwendet, die hergestellt werden durch Polykondensation von organischen Polycarbonsäuren mit mehrwertigen Alkoholen in Gegenwart von Titan-und/oder Zinnverbindungen als Katalysator bei Temperaturen von 150 bis 250°C.

2. Verfahren nach Anspruch 1, dadurch gekennzeichnet, daß die als Katalysatoren verwendeten Polyester-polyole (d) eine Funktionalität von 2 bis 4, eine Hydroxylzahl von 20 bis 300 und eine Säurezahl von kleiner als 10 besitzen.

3. Verfahren nach Anspruch 1, dadurch gekennzeichnet, daß die als Katalysatoren verwendeten Polyester-polyole (d) unter Zusatz von 0,002 bis 5 Gew.%, bezogen auf das Gewicht der Mischung aus Polycarbonsäuren und mehrwertigen Alkoholen, mindestens einer Titan-und/oder Zinnverbindung polykondensiert werden.

4. Verfahren nach Anspruch 1, dadurch gekennzeichnet, daß die als Katalysatoren verwendeten Polyester-polyole (d) unter Zusatz von 0,002 bis 5 Gew.%, bezogen auf das Gewicht der Mischung aus Polycarbonsäuren und mehrwertigen Alkoholen, mindestens eines ortho-Titansäureesters der Formel Ti-(OR)$_4$, in der R einen linearen, verzweigten oder cyclischen Alylrest mit 1 bis 6 Kohlenstoffatomen bedeutet, polykondensiert werden.

5. Verfahren nach Anspruch 1, dadurch gekennzeichnet, daß man die als Katalysatoren verwendeten Polyester-polyole (d) in einer Menge von 0,1 bis 10 Gew.-Teilen pro 100 Gew.-Teilen der Aufbaukomponente (b) einsetzt.

6. Verfahren nach Anspruch 1, dadurch gekennzeichnet, daß man als Katalysatoren eine Kombination verwendet aus tertiären Aminen und Polyester-polyolen (d), die hergestellt werden durch Polykondensation von organischen Polycarbonsäuren mit mehrwertigen Alkoholen in Gegenwart von Titan-und/oder Zinnverbindungen als Katalysator bei Temperaturen von 150 bis 250°C.

7. Verfahren nach Anspruch 1, dadurch gekennzeichnet, daß man als organische Polyisocyanate (a) verwendet:

i) NCO-Gruppen enthaltende Prepolymere mit einem NCO-Gehalt von 25 bis 9 Gew.%, bezogen auf das Gesamtgewicht und/oder

ii) modifizierte Urethangruppen enthaltende organische Polyisocyanate mit einem NCO-Gehalt von 33,6 bis 15 Gew.%, bezogen auf das Gesamtgewicht.

8. Verfahren nach Anspruch 1, dadurch gekennzeichnet, daß man als höhermolekulare Verbindungen mit mindestens 2 reaktiven Wasserstoffatomen (b) Polyether-und/oder Polyester-polyole mit einer Funktionalität von 2 bis 4 und einem Molekulargewicht von 1200 bis 6000 verwendet.

9. Verwendung eines Polyester-polyols mit einer Funktionalität von 2 bis 4, einer Hydroxylzahl von 20 bis 300 und einer Säurezahl von kleiner als 10, hergestellt durch Polykondensation von organischen Polycarbonsäuren mit mehrwertigen Alkoholen in Gegenwart von 0,002 bis 5 Gew.%, bezogen auf das Gewicht der Mischung aus Polycarbonsäuren und mehrwertigen Alkoholen, mindestens einer Titan-und/oder Zinnverbindung, vorzugsweise eines organischen Titansäureesters der Formel Ti(OR,$_4$, in der R einen linearen, verzweigten oder cyclischen Alkylrest mit 1 bis 6 Kohlenstoffatomen bedeutet, als Katalysator bei Temperaturen von 150 bis 250°C, in einer Menge von 0,1 bis 10 Gew.-Teilen pro 100 Gew.-Teilen der höhermolekularen Verbindungen mit mindestens 2 reaktiven Wasserstoffatomen (b) als Katalysator zur Herstellung von Kunststoffen nach dem Polyisocyanat-polyadditionsverfahren, vorzugsweise von Polyurethan-Kunststoffen.

10. Verwendung einer Katalysatorkombination, bestehend aus 0,001 bis 5 Gew.-Teilen eines tertiären Amins und 0,1 bis 5 Gew.-Teilen mindestens eines Polyester-polyols gemäß Anspruch 9, pro 100 Gew.-Teilen der Aufbaukomponente b) als Katalysator zur Herstellung von Kunststoffen nach dem Polyisocyanat-polyadditionsverfahren, vorzugsweise von Polyurethan-Kunststoffen.

11. Polyurethan-Elastomerschuhsohlen mit einer Dichte von 0,3 bis 0,7 g/cm$^3$, hergestellt nach dem Verfahren gemäß Anspruch 1.